# EUROPEAN PATENT SPECIFICATION

(11) **EP 2 028 824 B1**
(45) Date of publication and mention of the grant of the patent: **26.05.2010**
(21) Application number: 07816989.3
(22) Date of filing: 26.09.2007
(51) Int. Cl.: H04L 29/08, H04L 12/56, H04L 12/24

(54) **THE PROCESS METHOD FOR TRAFFIC ENGINEERING LINK INFORMATION**
PROZESSVERFAHREN FÜR VERKEHRSTECHNISCHE VERBINDUNGSINFORMATIONEN
PROCÉDÉ DE TRAITEMENT DESTINÉ AUX INFORMATIONS DE LIAISON D'INGÉNIERIE DE TRAFIC

(30) Priority: 26.09.2006 CN 200610152322
(43) Date of publication of application: 25.02.2009
(73) Proprietor: Huawei Technologies Co., Ltd., Longgang District, Shenzhen Guangdong 518129 (CN)
(72) Inventor: GAO, Jianhua, Shenzhen Guangdong 518129 (CN); LI, Dan, Shenzhen Guangdong 518129 (CN)
(74) Representative: Lord, Michael
(86) International application number: PCT/CN2007/070798
(87) International publication number: WO 2008/040254

(56) References cited:
- CN-A- 1 661 984
- CN-A- 1 694 418
- CN-A- 1 825 844
- CN-A- 1 825 844
- US-A1- 2005 089 027
- FARREL OLD DOG CONSULTING J-P VASSEUR CISCO SYSTEMS A ET AL: "A Path Computation Element (PCE)-Based Architecture; rfc4655.txt" IETF STANDARD, INTERNET ENGINEERING TASK FORCE, IETF, CH, 1 August 2006 (2006-08-01), XP015047407 ISSN: 0000-0003
- LANG J ET AL: "Link Management Protocol (LMP); rfc4204.txt" IETF STANDARD, INTERNET ENGINEERING TASK FORCE, IETF, CH, 1 October 2005 (2005-10-01), XP015054885 ISSN: 0000-0003
- KOMPELLA K. ET AL.: 'Routing Extensions in Support of Generalized Multi-Protocol Label Switching (GMPLS)' NETWORK WORKING GROUP vol. RFC 4202, October 2005, pages 7 - 8
- KOMPELLA K. ET AL.: 'OSPF Extensions in Support of Generalized Multi-Protocol Label Switching (GMPLS)' NETWORK WORKING GROUP vol. RFC 4203, October 2005, page 2

## Description

### Field of the Invention

The present invention relates to network communication technologies, and particularly, to a method for processing information of a Traffic Engineering (TE) link.

### Background of the Invention

With the development of the Generalized Multi-Protocol Label Switching (GMPLS) or Multi-Protocol Label Switching (MPLS) technology defined by the standardization organization of the Internet Engineering Task Force (IETF), the function of automatic end-to-end routing may be implemented for a user service by adding a control plane into a transport network on the basis of the Packet-Switch Capable (PSC) or Time Division Multiplex (TDM).

In the control plane, a node distributes state information of Traffic Engineering (TE) links acquired by the node by using a routing protocol in the network, and receives state information of real time TE links sent from other network nodes in the network. Eventually, each node in the transport network may acquire a copy of "network map" describing the network topology information of the global transport network. The "network map" includes information such as nodes, links and resources. When requested by user equipment or a management system for establishing a Label Switched Path (LSP) connection, a node in the transport network may acquire a feasible path by using the information included in the above "network map" and combining it with a certain routing algorithm. Then, the node drives the nodes on the path till the destination node via a signaling protocol to establish the LSP connection. Therefore, the LSP connection is dynamically established. When resources of links are changed caused by the dynamic establishment, remove and failure of a network connection, the corresponding optical network node needs to distribute updated information of nodes and resources of TE links in time to synchronously update the above "network map".

To improve the reliability of a user service transported in the transport network, multiple protection technologies are adopted in the existing transport network. For example, linear multiplex section and multiplex section ring protection technologies are largely adopted in the existing Synchronous Digital Hierarchy (SDH) / Synchronous Optical Network (SONET) network, and technologies such as the Resilient Packet Ring (RPR) technology on the basis of share protection is adopted to protect resources of links in a packet transport network. In the above linear multiplex section, multiplex section protection ring and RPR technologies, partial or all of physical resources of one or more ring shaped or line shaped links are used to protect partial or all of physical resources of another or other ring shaped or line shaped links.

The GMPLS or MPLS provides some protection attributes for processing TE links. For example, the following several link protection attributes, Extra Service, Unprotected, Shared, Dedicated 1:1, Dedicated 1+1 and Enhanced are provided. Moreover, the Open Shortest Path First (OSPF) based sub-Type/Length/Value (sub-TLV) and the corresponding coding value of the sub-TLV is defined. In general, such resources of TE links with protection attributes are used to establish LSPs for a connection service with a demand for a certain protection grade in the transport network.

A TE link is composed of multiple pairs of fiber links in general when having the above protection attributes. Alternatively, each pair of the fiber links composes one TE link but there is a protection relation between two or more pairs of the fiber links. Only availability of a TE link may be described in accordance with the conventional method but actual operation state of the TE link with the protection attributes cannot be accurately described, when some fiber links in a TE link fail or a fiber link in TE links with protection relations fails. Therefore, nodes in the network cannot determine and establish LSPs meeting the demand for protection grade, or cannot determine whether the LSP the protection grade of which is degraded due to passing a failed link needs to be optimized, since there is no actual operation state information of TE links.

There is a conventional method for processing the failure of a TE link. The method includes: in the case that the linear multiplex section protection and the multiplex section protection ring protection are configured in an SDH/SONET or OTN transport network, or the RPR ring protection is configured in a PSC transport network, after a part of fiber links in a TE link in the linear multiplex section, multiplex section protection ring, or RPR ring failure, a node affected by the failure indicates that the TE link is unavailable by setting a reachable address of the peer node of the link to 0 and flooding it with a routing protocol in the network. Alternatively, a control plane does not process the failure of the part of fiber links if the TE link is still capable of bearing a service although a part of the fiber links in the TE link fail.

The inventor found the following disadvantages in the above method in accordance with the conventional method when implementing the present invention.
1. The actual operation situation of TE links with protection attributes in the network cannot be identified effectively with the method when a part of fiber links related to the TE links fail. A node which is not directly related to the failure in the network can determine and establish an LSP connection merely according to the existing and inaccurate information of resources of the TE links. Therefore, the established LSP connection will not be able to attain a protection grade demanded in advance, or even the LSP connection cannot be established successfully if the established LSP connection passes a failed TE link.
2. For an established LSP connection, the protection grade of the LSP connection is degraded in fact although the LSP connection is still able to operate normally, if the LSP connection passes a TE link affected by the failure. A head node cannot make an appropriate adjustment to the LSP with the degraded protection grade according to the actual operation situation of the TE link because the head node cannot perceive that a fiber link related to the TE link fails. For example, the node in the network cannot determine whether the LSP connection affected by the failure needs to be optimized by rerouting to meet the demand for protection grade defined for the connection service in advance.

In addition, CN1825844, published on August 30, 2006, discloses a realizing method for diffusing link state information in an optical network including: determining segment information of the link protection attributes contained in the flow engineering TE link to be loaded in a self-defined TLV then diffusing the flow engineering link loading said TLV by the TE LSA in an optical network, which can support a TE link corresponding to a fiber to configure multiple protection kinds.

FARREL OLD DOG CONSULTING J-P VASSEUR CISCO SYSTEMS A ETAL: "A Path Computation Element (PCE)-Based Architecture; rfc4655.txt" IETF STANDARD, INTERNET ENGINEERING TASK FORCE, IETF, CH, 1 August 2006 (2006-08-01), XP015047407 ISSN:0000-0003, discloses an architecture for a Path Computation Element (PCE)-based model to address the problem of Path computation in large, multi-domain, multi-region, or multi-layer networks, and describes a set of building blocks for the PCE architecture from which solutions may be constructed.

### Summary

In view of the above problems in the conventional method, the present invention is to provide a method for processing information of a TE link, by which a control plane can reflect the change in the operation state of the TE link with protection attributes in real time and thus enable the network to establish a service connection meeting a particular demand for a protection grade according to the newest operation state information of the TE links, or trigger a rerouting optimization processing for an existing service connection.

The present invention is achieved with the following method and a network node.

A method for processing information of a Traffic Engineering (TE) link includes:
acquiring, by a network node, at least one protection attribute type of a TE link and operation state information corresponding to each protection attribute type of the TE link; wherein the operation state information comprises: a normal operation state, an occupied state, a disconnected state, an unprotected state, a shared protection state and a Dedicated 1:1 protection state;
and
distributing, by the network node, the acquired at least one protection attribute type of a TE link and the operation state information corresponding to each protection attribute type of the TE link in a network.

A network node includes:
an information acquirement module, configured to acquire at least one protection attribute type of a TE link and operation state information corresponding to each protection attribute type of the TE link; wherein the operation state information comprises:
   a normal operation state, an occupied state, a disconnected state, an unprotected state, a shared protection state and a Dedicated 1:1 protection state;
   and
   an information distribution module, configured to distribute the acquired at least one
   protection attribute type of the TE link and the operation state information corresponding to each protection attribute type of the TE link in a network.

As can be seen from the above technical solutions provided by the present invention, in the present invention, a network node acquires the updated operation state information of one or more TE links related to the failure in time and distributes the acquired information in the network, when a failure occurs in the network or the network is recovered from a failure. Compared with the conventional method, the present invention has the following advantages.
1. A control plane is enabled to reflect a change in operation state of resources of a TE link in time, enabling the network to establish a service connection meeting a particular demand for protection grade according to the newest operation state information of the resources of the TE link with protection attributes, or trigger a rerouting optimization processing for an existing service connection.
2. The situation that various failures occur in a TE link with particular protection attributes may be acquired according to state information of the TE link distributed by network nodes, and thus the control plane on the basis of the GMPLS protocol is enabled to be compatible with various protection switching technologies in a transport plane. For example, the control plane is enabled to be compatible with the linear multiplex section protection and the multiplex section ring protection in an SDH/SONET/OTN optical transport network, or the protection technologies in the transport plane similar to the RPR ring protection in a PSC network.

### Brief Description of the Drawings

Figure 1 shows a flow chart of a method in accordance with an embodiment of the present invention;
Figure 2 shows a schematic diagram illustrating the structure of a network with Dedicated 1:1 protection configuration and 2-fiber bidirectional multiplex section protection ring protection configuration in a first embodiment of the method in accordance with the present invention;
Figure 3 shows a schematic diagram illustrating the structure of a network with Dedicated 1+1 protection configuration and 4-fiber bidirectional multiplex section protection ring protection configuration in a second embodiment of the method in accordance with the present invention; and
Figure 4 shows a schematic diagram of performing a rerouting optimization processing for an existing LSP connection after a failure occurs in the network shown in Figure 3.

### Detailed Description of the Invention

The present invention provides a method for processing information of TE links. In the present invention, a corresponding network node acquires updated operation state information of one or more TE links related to a failure and distributes the acquired information to any other node or a PCE in the network, after a failure or recovery of a failure occurs in fiber links corresponding to a TE link configured with protection attributes.

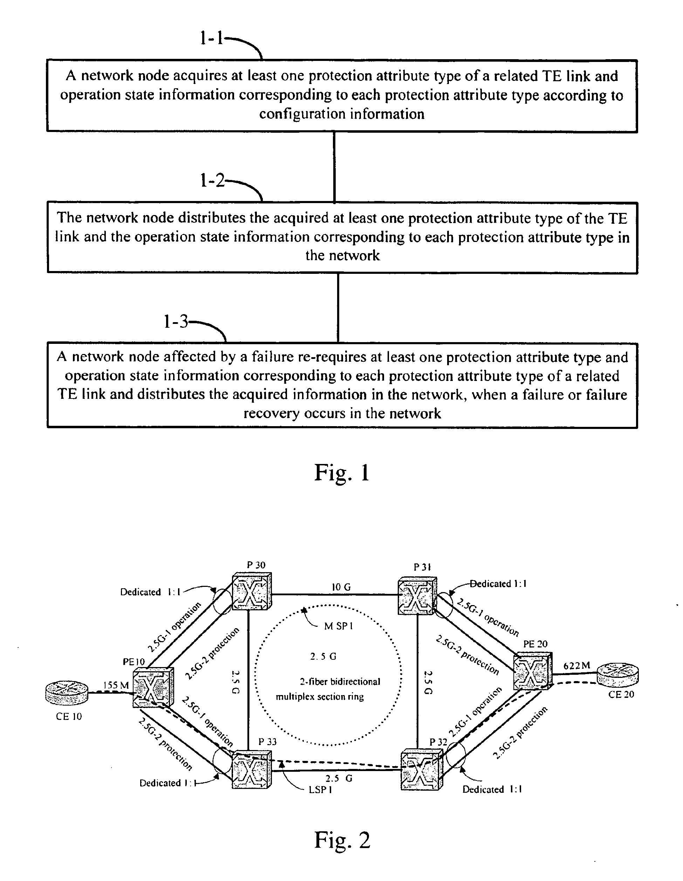

The present invention is hereinafter described in detail with reference to attached drawings. As shown in Figure 1, the processing procedure of a method in accordance with an embodiment of the present invention includes the following processes.

Block 1-1: A network node acquires at least one protection attribute type of a related TE link and operation state information corresponding to each protection attribute type according to configuration information.

In order to improve the survivability of a transport network and enhance the capability of the transport network to stand against a link or node failure, some particular protection technologies are generally configured in TE links between two or more nodes in the transport network in practical applications. For example, a linear multiplex section protection or 2/4 fiber bi-directional multiplex section protection ring protection is configured in a group of nodes in an SDH/SONET/OTN optical transport network, or a RPR ring protection is configured in a PSC network.

TE links among a group of network nodes configured with particular protection technologies have certain protection attributes such as protection attributes of Extra Service, Unprotected, Shared, Dedicated 1:1, Dedicated 1+1 and Enhanced types, after the above particular protection technologies have been configured.

Operation state information corresponding to resources of a TE link with various protection attributes is hereafter described.

The resources of the TE link with the Extra Service protection attribute have the following three operation states:
1. normal operation state, i.e. the resources of the TE link operate normally. In this case, a TE link may bear normal extra traffic;
2. occupied state, i.e. an operation link protected by the TE link is disconnected and the resources of the TE link are occupied by the protected operation resources. In such a case, the resources of the TE link are used to bear services in the protected link and cannot bear an extra service, and an extra service that has been borne is also interrupted;
3. disconnected state, i.e. a fiber link where the TE link is located is disconnected. In this case, the resources of the TE link cannot bear any service, and an extra service that has been borne is also interrupted.

The resources of a TE link with the Unprotected protection attribute have the following two operation states:
1. normal operation state, i.e. the resources of the TE link operate normally. In this case, the resources of the TE link can bear a normal unprotected service;
2. disconnected state, i.e. a fiber where the resources of the TE link is located is disconnected. In this case, the resources of the TE link cannot bear any service, and an unprotected service that has been borne is also interrupted.

The resources of a TE link with the Shared protection attribute have the following three operation states:
1. normal operation state, i.e. the resources of the TE link operate normally. In this case, a service borne by the resources of the TE link has the shared protection.
2. unprotected state, i.e. an operation fiber corresponding to the TE link is disconnected and the operation resources occupy the corresponding protection link resource successfully, the operation fiber corresponding to the TE link operates normally but all the protection link resources related to the TE link are occupied by other operation links with the Shared protection attribute, or a fiber where a link for the Shared protection attribute is disconnected. In the above three cases, a TE link configured with the Shared protection attribute may keep on bearing a service but a service being borne cannot be protected for the moment.
3. disconnected state, i.e. an operation fiber corresponding to the TE link is disconnected and the operation resources cannot occupy protection resource successfully, or the operation fiber corresponding to the TE link is disconnected and the protection link related to the TE link is disconnected also at the same time. In the above two cases, the resources of the TE link cannot bear any service and a service that has been borne is also interrupted.

The resources of a TE link with the Dedicated 1:1 protection attribute have the following three operation states:
1. normal operation state, i.e. the resources of the TE link operate normally. In this case, a service borne by the resources of the TE link has the Dedicated 1:1 protection attribute.
2. unprotected state, i.e. an operation fiber corresponding to the TE link is disconnected and the operation link resources occupy the corresponding protection link resources successfully, or a fiber where the protection link corresponding to the TE link is located is disconnected. In the above two cases, the TE link configured with the Dedicated 1:1protection attribute may keep on bearing a service but a service being borne cannot be protected for the moment.
3. disconnected state, i.e. the operation fiber corresponding to the TE link is disconnected and the operation resources cannot occupy the protection link resources successfully, or the operation fiber corresponding to the TE link is disconnected and the protection link related to the TE link is disconnected also at the same time. In the above two cases, the TE link cannot bear any service and a service that has been borne is also interrupted.

The resources of a TE link with the Dedicated 1+1 protection attribute have the following three operation states:
1. normal operation state, i.e. the resources of the TE link operate normally. In this case, a service borne by the resources of the TE link has the Dedicated 1+1 protection attribute.
2. unprotected state, i.e. an operation fiber or protection fiber corresponding to the TE link is disconnected. In the above case, the TE link configured with the Dedicated 1+1 protection attribute may keep on bearing a service but a service being borne cannot be protected for the moment.
3. disconnected state, i.e. the operation fiber and the protection fiber corresponding to the TE link are disconnected at the same time. In the above case, the TE link cannot bear any service and a service that has been borne is also interrupted.

The resources of a TE link with the Enhanced protection attribute have the following five operation states:
1. normal operation state, i.e. the resources of the TE link operate normally. In this case, a service borne by the TE link resource has the Enhanced protection attribute.
2. shared protection state, i.e. an operation fiber corresponding to the TE link is disconnected and the operation resources occupy the corresponding protection link resources successfully. In this case, protection link resources of the TE link have the shared protection attribute, and a service borne by the TE link resource has the shared protection attribute.
3. Dedicated 1:1 protection state, i.e. the operation fiber corresponding to the TE link operates normally but the protection link corresponding to the TE link may be occupied by the operation link resources. In such a case, a service borne by the TE link resource has the Dedicated 1:1 protection attribute.
4. unprotected state, i.e. the operation fiber corresponding to the TE link is disconnected and the operation resources occupy the corresponding protection link resources successfully, and the protection link resources cannot be protected by resources of other links again, or the operation fiber and the protection fiber corresponding to the TE link are disconnected at the same time but the protection fiber occupies link resources with the Shared protection attribute due to the disconnection. In the above two cases, the TE link configured with the Enhanced protection attribute may keep on bearing a service but a service being borne cannot be protected for the moment.
5. disconnected state, i.e. the operation fiber corresponding to the TE link is disconnected and the operation resources cannot occupy the protection resources successfully, or the operation fiber corresponding to the TE link is disconnected and all the possible protection links related to the TE link are also disconnected at the same time. In the above two cases, the TE link cannot bear any service and a service that has been borne is also interrupted.

To sum up, possible operation states corresponding to the resources of the TE links with different protection attributes are shown in the following Table 1.

**Table 1: schematic table of operation states corresponding to the resources of the TE links with different protection attributes**

| Protection attribute of a TE link | Possible operation states of the TE link |
|---|---|
| Extra Service protection attribute | Normal operation state |
| | Occupied state |
| | Disconnected state |
| Unprotected protection attribute | Normal operation state |
| | Disconnected state |
| Shared protection attribute | Normal operation state |
| | Unprotected state |
| | Disconnected state |
| Dedicated 1:1 protection attribute | Normal operation state |
| | Unprotected state |
| | Disconnected state |
| Dedicated 1+1 protection attribute | Normal operation state |
| | Unprotected state |
| | Disconnected state |
| Enhanced protection attribute | Normal operation state |
| | Shared protection state |
| | Dedicated 1:1 protection state |
| | Unprotected state |
| | Disconnected state |

When the network operates, a network node acquires one or more protection attribute types of all TE links related to the network node and operation state information corresponding to each protection attribute type according to protection attribute information configured in advance.

Block 1-2: The network node distributes the acquired at least one protection attribute type of the TE link and the operation state information corresponding to each protection attribute type in the network.

The network node binds the acquired at least one protection attribute type of the TE link and the operation state information together, and distributes the bound protection attribute type of the TE link and the corresponding operation state information to any other node and the PCE in the network.

The network node sends the acquired information to any other node or a Path Calculation Element (PCE) through a routing protocol, after acquiring the one or more protection attributes corresponding to the related TE link and the actual operation state information corresponding to each protection attribute type of the TE link. Therefore, the any other node or PCE in the network may acquire and store one or more protection attributes of each TE link in the global network and the operation state information corresponding to each protection attribute type according to information distributed by the any other node.

A network node may determine and establish an LSP connection meeting the demand for a requested protection grade according to one or more protection attributes and operation state information corresponding to each protection attribute type of each TE link stored locally or stored in the PCE, when receiving a request for establishing an LSP with demand for a certain protection grade.

Block 1-3: A network node affected by a failure re-requires at least one protection attribute type and operation state information corresponding to each protection attribute type of a related TE link and distributes the acquired information in the network, when a failure or failure recovery occurs in the network.

The network node affected by the failure updates the operation state information of the TE link of the corresponding protection type according to various failures and sends the re-acquired updated operation state information of the resource with a particular protection attribute in the TE link to any other node or a PCE in the network, when the failure or failure recovery occurs in the network.

Nodes on an established LSP connection affected by the failure trigger the rerouting of an established LSP connection according to the current operation state information of resources of a passed TE link to ensure that a connection service borne by the established LSP connection meets the predetermined demand for protection grade.

The change in the operation state of resources of a TE link and the corresponding processing process of the network node when a failure or failure recovery occurs in the network are hereinafter described in conjunction with a specific protection attribute type.

If two pairs of fiber links between two neighboring nodes in the network are configured with Dedicated 1:1 protection, the nodes on both sides of the fiber links determine the two pairs of fiber links as two TE links. All resources of one TE link have Dedicated 1:1 protection attribute while all resources of the other TE link have Extra Service protection attribute.

When a failure occurs in the fiber link corresponding to the TE link with the Dedicated 1:1 protection attribute, the resources on the TE link occupy the resources of the other TE link with the Extra Service protection attribute. In this case, the failure affects the nodes on both sides of the fiber link, and the nodes on both sides of the fiber link determine the operation states of the resources of the TE links between the two nodes as follows:
1. the actual operation state of the resources of the TE link with the Dedicated 1:1 protection attribute is "unprotected state"; and
2. the actual operation state of the resources of the TE link with the Extra Service protection attribute is the "occupied state".

When a failure occurs in the fiber link corresponding to the TE link with the Extra Service protection attribute, the nodes on both sides of the fiber link determine the operation states of the resources of the TE links between the two nodes as follows:
1. the actual operation state of the resources of the TE link with the Dedicated 1:1 protection attribute is "unprotected state"; and
2. the actual operation state of the resources of the TE link with the Extra Service protection attribute is "disconnected state".

When a failure occurs simultaneously in both the fiber links respectively corresponding to the TE link with the Dedicated 1:1 protection attribute and the TE link with the Extra Service protection attribute, the nodes on both sides of the fiber links determine the operation states of the resources of the TE links between the two nodes as follows:
1. the actual operation state of the resources of the TE link with the Dedicated 1:1 protection attribute is "disconnected state"; and
2. the actual operation state of the resources of the TE link with the Extra Service protection attribute is "disconnected state".

The operation state information of the resources of the two TE links resumes "normal operation state" when the two TE links are recovered from the failure.

The network nodes affected by the failure distribute the acquired information to any other node or a PCE in the network after acquiring new operation state information of the corresponding TE links. Therefore, on the basis of the newest operation state information of the resources of the TE link with the Dedicated 1:1 protection attribute and the resources of the TE link with the Extra Service protection attribute, the network may establish a new LSP connection meeting the demand for the protection grade of the Dedicated 1:1 protection attribute or the Extra Service protection attribute, or trigger the rerouting processing of an existing LSP connection affected by the failure to meet the demand for protection grade of a connection service borne by the LSP connection.

If two pairs of fiber links between two neighboring nodes in the network are configured as Dedicated 1+1 protection, nodes on both sides of the fiber links determine the two fiber links as one TE link with the Dedicated 1+1 protection attribute.

When a failure occurs in either of the two pairs of fiber links corresponding to the TE link, the failure affects the nodes on both sides of the fiber links and the nodes on both sides of the link determine that the actual operation state of the resources of the TE link with the Dedicated 1+1 protection attribute is "unprotected state".

When a failure occurs synchronously in both of the two pairs of fiber links corresponding to the TE link, the nodes on both sides of the TE link determine that the actual operation state of the resources of the TE link with the Dedicated 1+1 protection attribute is "disconnected state".

When one or two pairs of the fiber links corresponding to the above TE link are recovered from the failure, the operation state information of the TE link resumes "unprotected state" or "normal operation state".

The above network nodes affected by the failure distributes the acquired information to any other node or a PCE in the network after acquiring the updated operation state information of the resources of the corresponding TE link. Therefore, according to the updated operation state information of the resources of the TE link with the Dedicated 1+1 protection attribute, the network may establish a new LSP connection meeting the demand for the protection grade of Dedicated 1+1 protection, or trigger rerouting processing of an existing LSP connection affected by the failure to meet the demand for protection grade of a connection service borne by the LSP connection.

If a 2-fiber bi-directional multiplex section shared protection ring is configured between a group of nodes in the network, a half resources of one pair of fiber links between two neighboring nodes in the 2-fiber bi-directional multiplex section protection ring have Shared protection attribute while the other half resources have Extra Service protection attribute. The nodes on both sides of the fiber links determine the pair of fiber links as one TE link. The TE link has resources respectively with two types of protection attributes. A half of the resources have the Shared protection attribute while the other half of the resources have the Extra Service protection attribute. According to an existing 2-fiber bi-directional multiplex section protection ring protection technology, a failure affects all nodes on the 2-fiber bi-directional multiplex section protection ring if the failure occurs in any link on the 2-fiber bi-directional multiplex section protection ring.

When a failure occurs in a fiber link between two neighboring nodes on the 2-fiber bi-directional multiplex section protection ring, resources with the Shared protection attribute of the TE link between the nodes on both sides of the failed link occupy resources with the Extra Service protection attribute of a TE link between other two nodes on the 2-fiber bi-directional multiplex section protection ring. In this case, the nodes on both sides of the failed fiber link determine the operation states of the resources of the TE link between the two nodes as follows:
1. the actual operation state of the resources with the Shared protection attribute of the TE link is "unprotected state";
2. the actual operation state of the resources with the Extra Service protection attribute of the TE link is "occupied state".

Meanwhile, nodes on both sides of other fiber links where no fiber disconnection occurs on the 2-fiber bi-directional multiplex section protection ring determine that there are changes in the operation states of the resources of the TE link between the two nodes, i.e. the nodes on both sides of other fiber links where no fiber disconnection occurs in the multiplex section protection ring determine the current states of the TE link between the two nodes as follows:
1. the actual operation state of the resources with the Shared protection attribute of the TE link is the "unprotected state";
2. the actual operation state of the resources with the Extra Service protection attribute of the TE link is the "occupied state".

The above nodes on the 2-fiber bi-directional multiplex section protection ring affected by the failure distribute the acquired information to any other node or a PCE in the network after acquiring the updated operation state information of the resources of the corresponding TE link. Therefore, according to the newest operation state information of the resources with the Shared protection attribute and the resource with the Extra Service protection attribute of the TE link, the network may establish a new LSP connection meeting the demand for the protection grade of Shared protection or Extra Service protection, or trigger the rerouting processing of an existing LSP connection affected by the failure to meet the demand for protection grade of a connection service borne by the LSP connection.

The failure processing for a TE link with protection configuration executed by nodes on a RPR protection ring after the RPR ring protection is configured between a group of nodes in a PSC network is substantially the same as that for the 2-fiber multiplex section protection ring.

If a 4-fiber bi-directional multiplex section shared protection ring is configured between a group of nodes in the network, all resources of one of the two pairs fiber links between two neighboring nodes on the 4-fiber bi-directional multiplex section shared protection ring have Enhanced protection attribute while all resources of the other pair of fiber links have Extra Service protection attribute. Nodes on both sides of the fiber links determine the two pairs of fiber links as two TE links. One of the two TE links has the Enhanced protection attribute while the other TE link has the Extra Service protection attribute. According to an existing 4-fiber bi-directional multiplex section protection ring protection technology, a failure occurring in any fiber link on the 4-fiber bi-directional multiplex section shared protection ring affects all nodes on the 4-fiber bi-directional multiplex section shared protection ring.

When a failure occurs in a fiber link corresponding to the TE link with the Enhanced protection attribute between two neighboring nodes on the 4-fiber bi-directional multiplex section shared protection ring, after the failure occurs in the TE link with the Enhanced protection attribute, resources with the Enhanced protection attribute is preferably switched onto the protection link between the two nodes through section protection according to the existing 4-fiber bi-directional multiplex section protection ring protection technology. In such a case, the TE link resource with the Enhanced protection attribute still has the Shared protection, and nodes on both sides of a failed fiber link determine the operation states of the resources of the TE link between the two nodes as follows:
1. the actual operation state of the resources of the TE link with the Enhanced protection attribute is "shared protection state";
2. the actual operation state of the resources of the TE link with the Extra Service protection attribute is "occupied state".

Meanwhile, affected by the above failure, nodes on both sides of other links where no fiber disconnection occurs on the 4-fiber bi-directional multiplex section shared protection ring also determine that there are changes in the operation states of the resources of the TE link between the two nodes, i.e. the nodes on both sides of other links where no fiber disconnection occurs on the 4-fiber bi-directional multiplex section shared protection ring determine the states of the resources of the TE link between the two nodes as follows:
1. the actual operation state of the resources of the TE link with the Enhanced protection attribute is the "Dedicated 1:1 protection state";
2. the actual operation state of the resources of the TE link with the Extra Service protection attribute is still the "normal operation state".

When a failure occurs again in the backup fiber link between the two nodes on the 4-fiber bi-directional multiplex section shared protection ring where a failure has already occurred, operation resources borne on the backup fiber are switched onto backup link resources among all the other nodes on the 4-fiber bi-directional multiplex section shared protection ring. The nodes on both sides of the failed fiber link determine the operation states of the resources of the TE link between the two nodes as follows:
1. the actual operation state of the resources of the TE link with the Enhanced protection attribute is the "unprotected state";
2. the actual operation state of the resources of the TE link with the Extra Service protection attribute is the "occupied state".

Meanwhile, nodes on both sides of fiber links in the4-fiber bi-directional multiplex section shared protection ring where no fiber disconnection failure occurs also determine the operation states of the resources of the TE link between the two nodes as follows:
1. the actual operation state of the resources of the TE link with the Enhanced protection attribute is the "Dedicated 1:1 protection state" in accordance with the section protection first principle of the 4-fiber multiplex section protection ring protection technology;
2. the actual operation state of the resources of the TE link with the Extra Service protection attribute is the "occupied state".

When a failure occurs again in the backup fiber link between other nodes on the 4-fiber bi-directional multiplex section shared protection ring, nodes on both sides of the backup fiber link determines the operation states of the resources of the TE link between the two nodes as follows:
1. the actual operation state of the resources of the TE link with the Enhanced protection attribute is the "unprotected state";
2. the actual operation state of the resources of the TE link with the Extra Service protection attribute is the "disconnected state".

Meanwhile, the failure in the backup fiber does not affect nodes on both the sides of a fiber link in the 4-fiber bi-directional multiplex section shared protection ring where no failure occurs, but the two nodes in the multiplex section protection ring where a failure has occurred continuously for two times determine that the operation states of the resources of the TE link between the two nodes as follows:
1. the actual operation state of the resources of the TE link with the Enhanced protection attribute is the "disconnected state";
2. the actual operation state of the resources of the TE link with the Extra Service protection attribute is the "disconnected state".

The nodes affected by all the above failure distribute acquired information to any other node or a PCE in the network after acquiring the updated operation state information of the resources of the corresponding TE link. Therefore, according to the updated operation state information of the resources of the TE link with the Enhanced protection attribute or the Extra Service protection attribute, the network may establish a new LSP connection meeting the demand for the protection grade of the Enhanced protection or Extra Service protection, or trigger the rerouting processing of an existing LSP connection affected by the failure to meet the demand for protection grade of a connection service borne by the LSP connection.

A method of the present invention is hereinafter described for the case that the Dedicated 1:1 protection and the 2-fiber bi-directional multiplex section protection ring protection are configured between nodes in a network. The structure of the network configured with the Dedicated 1:1 protection and the 2-fiber bi-directional multiplex section protection ring protection in the first embodiment of the method of the present invention is show in Figure 2.

In the network shown in Figure 2, the transport network is composed of nodes PE10, PE20, P30, P31, P32 and P33, and CE10 and CE20 are user equipments in the transport network. A 2-fiber bi-directional multiplex section protection ring MSP 1 of 2.5G (i.e. 16*VC4) rate level is configured between nodes P30, P31, P32 and P33 in the transport network. Physical links between internal nodes of the transport network are configured as follows: two pairs of SDH fiber links of 2.5G rate level and with the Dedicated 1:1 protection are configured between PE10-P30 and between PE10-P33, and one of the two pairs is operation links and the other is protection links. One pair of SDH fiber links of 10G (i.e. 64*VC4) rate level are configured between P30-P31; one pair of SDH fiber links of 2.5G rate level are configured between P31-P32, between P32-P33, and between P33-P30; and two pairs of SDH fiber links of 2.5G rate level and with the Dedicated 1:1 protection are configured between PE20-P31 and between PE20-P32, and one of the two pairs is operation links and the other is protection links.

Nodes in the transport network shown in Figure 2 determine information such as protection attributes of TE links between the nodes and the neighboring nodes, available bandwidths, operation states of the resources of the TE links in the normal operation process.

Nodes PE10 and P30 may respectively determine that there are two TE links with available bandwidth of 16*VC (or 2.5Gb/s), one of the two TE links corresponds to the operation fiber between PE10 and P30 shown in Figure 2 and has the Dedicated 1:1 protection attribute, and the other TE link corresponds to the protection fiber between PE10 and P30 shown in Figure 2 and has the Extra Service protection attribute.

Nodes P30 and P31 may respectively determine that there is one TE link between the two nodes and the TE link corresponds to the 10G fiber link shown in Figure 2. The TE link includes resources with three protection attributes. The first resources with the Shared protection attribute of the TE link have an available bandwidth of 8*VC4 (or 8*155M), the second resources with the Extra Service protection attribute of the TE link have an available bandwidth of 8*VC4, and the third resources with the Unprotected protection attribute of the TE link have an available bandwidth of 48*VC4.

Nodes P30 and P33 may respectively determine that there is one TE link between the two nodes and the TE link corresponds to a 2.5G fiber link between P30 and P33 shown in Figure 2. The TE link includes resources with three protection attributes. The first resources with the Shared protection attribute of the TE link have an available bandwidth of 8*VC4 (or 8*155M), the second resources with the Extra Service protection attribute of the TE link have an available bandwidth of 8*VC4.

In like manner, any other node in the network may determine the information of resources of TE links between themselves and the neighboring nodes. The operation states of the resources of all the TE links corresponding to the various protection attributes are the "normal operation states" since no failure occurs in the network.

A network node distributes the information of the resources of the TE links with multiple protection attributes and the operation state information of the resources corresponding to each of the protection attribute acquired by the node to any other node in the network or the PCE in the network with the format shown in the following Table 2, after acquiring the information of the resources of the TE links and the operation state information between itself and any other node in the network.

**Table 2: format table of bound information**

| Identifier of a link | TE LINK ID |
|---|---|
| The protection attribute of resource 1 | Values of attributes |
| The available bandwidth of resource 1 corresponding to the protection attribute | Values of bandwidths |
| The operation state of resource 1 | Values of states |
| The protection attribute of resource 2 | Values of attributes |
| The available bandwidth of resource 2 corresponding to the protection attribute | Values of bandwidths |
| The operation state of resource 2 | Values of states |
| ....... | ........ |

The any other node or the PCE in the network form a table of information of TE links in the global network including operation state information corresponding to various resources of the TE links shown in the following Table 3, after information of the resources of the TE links and the operation state information acquired by all the network nodes have been distributed.

**Table 3: Table of the information of the TE links in the global network**

| Identifier of a TE link | Protection attribute of resources of the TE link | Operation state of the resources of the TE link | Available bandwidth of the TE link |
|---|---|---|---|
| PE10-1-P30 | Dedicated 1:1 protection attribute | Normal operation state | 16*VC4 |
| PE10-2-P30 | Extra Service protection attribute | Normal operation state | 16*VC4 |
| PE10-1-P33 | Dedicated 1:1 protection attribute | Normal operation state | 16*VC4 |
| PE10-2-P33 | Extra Service protection attribute | Normal operation state | 16*VC4 |
| P30- P31 | Shared protection attribute | Normal operation state | 8*VC4 |
| | Extra Service protection attribute | Normal operation state | 8*VC4 |
| | Unprotected protection attribute | Normal operation state | 48*VC4 |
| P30- P33 | Shared protection attribute | Normal operation state | 8*VC4 |
| | Extra Service protection attribute | Normal operation state | 8*VC4 |
| P31- P32 | Shared protection attribute | Normal operation state | 8*VC4 |
| | Extra Service protection attribute | Normal operation state | 8*VC4 |
| P32- P33 | Shared protection attribute | Normal operation state | 8*VC4 |
| | Extra Service protection attribute | Normal operation state | 8*VC4 |
| PE20-1-P31 | Dedicated 1:1 protection attribute | Normal operation state | 16*VC4 |
| PE20-2-P31 | Extra Service protection attribute | Normal operation state | 16*VC4 |
| PE20-1-P32 | Dedicated 1:1 protection attribute | Normal operation state | 16*VC4 |
| PE20-2-P32 | Extra Service protection attribute | Normal operation state | 16*VC4 |

When receiving a request for establishing an LSP with a certain protection attribute, a certain node in the network determines a corresponding LSP path between a source node and a destination node according to the information included in the table of the information of the resources of the TE links in the global network shown in the above Table 3 stored locally, or, the network node requests a PCE for a corresponding LSP path between the source node and the destination node according to the received request for establishing an LSP, and then the PCE node determines a corresponding LSP path between the source node and the destination node according to the information included in the table of the information of the resources of the TE links in the global network shown in the above Table 3 stored locally and sends the information of the determined LSP path to the network node. The network node establishes the LSP path with the corresponding bandwidth and protection attribute between the source node and the destination node through a signaling process according to the information of the LSP path sent from the PCE node.

For example, in the network shown in Figure 2, when receiving a request for establishing a connection with 155M (1*VC4) bandwidth and the Shared or Dedicated 1:1 protection attribute between nodes PE10 and PE20, node PE10 calculates an LSP path according to the information included in the table of the information of the resources of the TE links in the global network shown in the above Table 3 stored locally, or requests the PCE node for the information of an LSP path and finally acquires the information of the LSP path through a signaling process. Finally, node PE10 establishes LSP1 passing PE10, P33, P32 and PE 20 and meeting the demand for the above protection grade through a signaling process.

A network node updates information of corresponding available resources of a TE link according to the specific situation that the bandwidth resources of the TE link is used, when a part of the resources of the TE link in the network is used to bear a specific service. As shown in Figure 2, the information of the corresponding resources of the TE links which LSP1 passes is to be changed after LSP1 passing PE10, P33, P32 and PE20 is established.

Available resources with the Dedicated 1:1 protection attribute of the TE link between PE10 and P33 are changed to 15*VC4, available resources with the Shared protection attribute of the TE link between P32 and P33 are changed to 7*VC4, and available resources with the Dedicated 1:1 protection attribute of the TE link between PE20 and P32 are changed to 15*VC4.

The above nodes which path LSP1 passes, PE10, P33, P32 and PE20, distribute updated information of the available bandwidth resources of the TE link to the any other node or PCE in the network, after determining that a change occurs in the information of the resources of the TE link. Finally, the updated table of the information of the TE links in the global network after bearing a service is formed.

As shown in Figure 2, in the case that a disconnection failure occurs in the fiber link, P30-P31, between nodes P30 and P31 in the network, a failure occurs in multiplex section protection ring MSP 1 since the configured MSP 1 passes the TE link. All nodes on the multiplex section protection ring, (P30, P31, P32, P33), can perceive that a failure occurs in MSP 1.

Nodes P30 and P31 determine that the operation state of the resources with the Shared protection attribute of the related TE link, P30-P31, is updated to the "unprotected state", the operation state of the resources with the Extra Service protection attribute of P30-P31 is updated to the "occupied state", and the operation state of the resources with the Unprotected protection attribute of P30-P31 is updated to the "disconnected state".

Nodes P32 and P33 determine that the operation state of the resources with the Shared protection attribute of the related TE link, P32-P33, is updated to the "unprotected state", and the operation state of the resources with the Extra Service protection attribute of P32-P33 is updated to the "occupied state".

Nodes P30 and P33 determine that the operation state of the resources with the Shared protection attribute of the related TE link, P30-P33, is updated to the "unprotected state", and the operation state of the resources with the Extra Service protection attribute of P30-P33 is updated to the "occupied state".

The nodes affected by the failure, P30, P31, P32 and P33, distribute the acquired information to the any other node or a PCE in the network, after acquiring the updated operation state information of the TE links.

As shown in Figure 2, in the case that a disconnection failure occurs in the operation fiber link between nodes PE20 and P31 in the network, PE20-1-P32, resources in the operation fiber link between PE20 and P31 occupy resources in the protection fiber between PE20 and P31. Then, PE20 and P31 determine the updated operation state information of the resources with particular protection attributes of the TE link, i.e. nodes PE20 and P31 determine that the operation state of the resources with the Dedicated 1:1 protection attribute of the related TE link, PE20-1-P31, is updated to the "unprotected state", and the operation state of the resources with the Extra Service protection attribute of TE link PE20-1-P31 is updated to the "occupied state".

Nodes, P20 and P31, affected by the failure distribute acquired operation state information to the any other node or PCE in the network, after acquiring the updated operation state information of the TE link.

The table of the information of the TE links in the global network shown in Table 4 is formed in any other network node and a PCE by combining the updated operation state information of the resources with particular protection attributes of the TE links distributed by the related network nodes after a failure occurs in the established link, the multiplex section protection ring link and the Dedicated 1:1 protection link.

**Table 4: The updated table of the information of the TE links in the global network**

| Identifier of a TE link | Protection attribute type of the TE link | Operation state of the resources of the TE link | Available bandwidth |
|---|---|---|---|
| PE10-1-P30 | Dedicated 1:1 protection attribute | Normal operation state | 15*VC4 |
| PE10-2-P30 | Extra Service protection attribute | Normal operation state | 16*VC4 |
| PE10-1-P33 | Dedicated 1:1 protection attribute | Normal operation state | 16*VC4 |
| PE10-2-P33 | Extra Service protection attribute | Normal operation state | 16*VC4 |
| P30- P31 | Shared protection attribute | Unprotected state | 8*VC4 |
| | Extra Service protection attribute | Occupied state | 8*VC4 |
| | Unprotected protection attribute | Disconnected state | 48*VC4 |
| P30- P33 | Shared protection attribute | Unprotected state | 8*VC4 |
| | Extra Service protection attribute | Occupied state | 8*VC4 |
| P31- P32 | Shared protection attribute | Unprotected state | 8*VC4 |
| | Extra Service protection attribute | Occupied state | 8*VC4 |
| P32- P33 | Shared protection attribute | Unprotected state | 7*VC4 |
| | Extra Service protection attribute | Occupied state | 8*VC4 |
| PE20-1-P31 | Dedicated 1:1 protection attribute | Unprotected state | 16*VC4 |
| PE20-2-P31 | Extra Service protection attribute | Occupied state | 16*VC4 |
| PE20-1-P32 | Dedicated 1:1 protection attribute | Normal operation state | 15*VC4 |
| PE20-2-P32 | Extra Service protection attribute | Normal operation state | 16*VC4 |

The above embodiment is described for the 2-fiber bi-directional multiplex section protection ring protection configuration and the Dedicated 1:1 link protection configuration in the SDH. In fact, the processing method of the first embodiment may also be used for the 2-fiber bi-directional multiplex section protection ring configuration in a SONET or OTN network. Likewise, the processing method of the first embodiment may also be used for the RPR ring protection configuration technology in a PSC network.

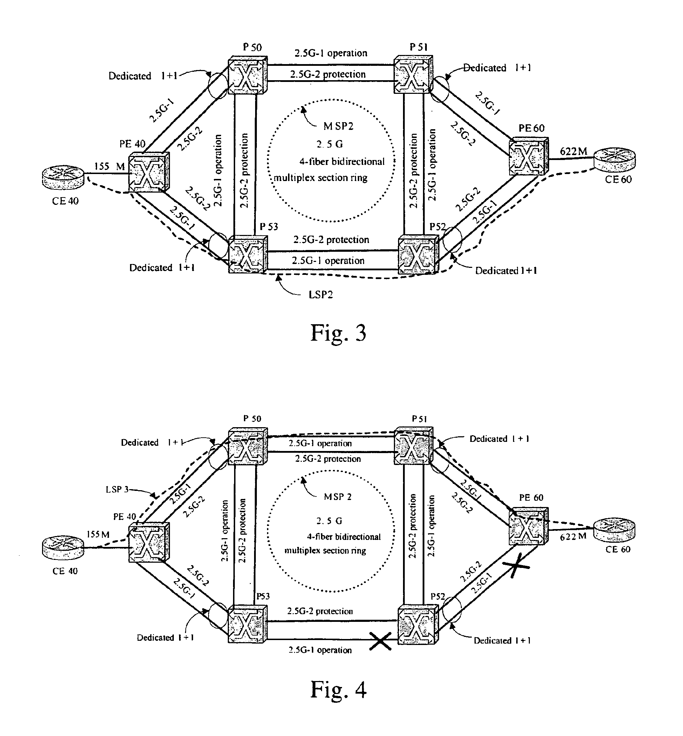

The present invention provides a method of the second embodiment in accordance with the present invention for a network with the Dedicated 1+1 protection configuration and 4-fiber bi-directional multiplex section protection ring protection configuration. The structure of the network with the Dedicated 1+1 protection configuration and 4-fiber bi-directional multiplex section protection ring protection configuration in the second embodiment is shown in Figure 3.

In the network shown in Figure 3, the transport network is composed of nodes PE40, PE50, P51, P52, P53 and PE60, and CE40 and CE60 are user equipments in the transport network. A 4-fiber bi-directional multiplex section protection ring MSP 2 of 2.5G (16*VC4) rate level is configured between nodes P50, P51, P52 and P53 in the transport network. Physical links among nodes of the transport network are configured as follows: two pairs of SDH fiber links of 2.5G rate level and with the Dedicated 1+1 protection are configured between PE40-P50, PE40-P53, PE60-P51 and PE60-P52, and one of the two pairs is operation links and the other is protection links; two pairs of SDH fiber links of 2.5G (i.e. 16*VC4) rate level are configured between PE50-P51, P51-P52, P52-P53 and P53-P50.

Nodes in the transport network shown in Figure 3 determine the information of the TE links between themselves and the neighboring nodes such as the protection attribute, available bandwidths, operation states of resources of the TE links in normal operation. For example, nodes PE40 and P50 may respectively determine that there are one TE link with the available bandwidth of 16*VC (or 2.5Gb/s) between the two nodes, and the TE link corresponds to two pairs of fibers between PE40 and P50 shown in Figure 3 and has the Dedicated 1:1 protection attribute. Nodes P30 and P31 may respectively determine that there are two TE links between P30 and P31, and the two TE links respectively correspond to two pairs of 2.5G fiber links between P30 and P31 shown in Figure 3. One of the two TE links corresponds to the pair of operation fiber links, P50-1-P51, and has the Enhanced protection attribute and 16*VC4 available bandwidth, and the other of the two TE links corresponds to the pair of protection fiber links, P50-2-P51, and has the Extra Service protection attribute and 16*VC4 available bandwidth. In like manner, the any other node in the network may determine TE link information between themselves and the neighboring nodes of themselves. The operation states of all the TE links are the "normal operation states" since no failure occurs in the network.

A network node distributes the information of the resources of TE links with different protection attributes and the operation state information acquired by the node to any other node or a PCE in the network with the format shown in the above Table 2 through a routing protocol, after acquiring the information of the TE links between itself and the neighboring nodes. The any other node or PCE in the network forms the table of the information of the TE links in the global network shown in the following Table 5, after the TE information betweens among the network nodes have been distributed.

**Table 5: Table of the information of the TE links in the global network after distribution**

| Identifier of a TE link | Protection attribute type of the resources of the TE link | Operation state of the resources of the TE link | Value of the available bandwidth |
|---|---|---|---|
| PE40-P50 | Dedicated 1+1 protection attribute | Normal operation state | 16*VC4 |
| PE40-P53 | Dedicated 1+1 protection attribute | Normal operation state | 16*VC4 |
| P50-1-P51 | Enhanced protection attribute | Normal operation state | 16*VC4 |
| P50-2-P51 | Extra Service protection attribute | Normal operation state | 16*VC4 |
| P50-1-P53 | Enhanced protection attribute | Normal operation state | 16*VC4 |
| P50-2-P53 | Extra Service protection attribute | Normal operation state | 16*VC4 |
| P51-1-P52 | Enhanced protection attribute | Normal operation state | 16*VC4 |
| P51-2-P52 | Extra Service protection attribute | Normal operation state | 16*VC4 |
| P52-1-P53 | Enhanced protection attribute | Normal operation state | 16*VC4 |
| P52-2-P53 | Extra Service protection attribute | Normal operation state | 16*VC4 |
| PE60-P51 | Dedicated 1+1 protection attribute | Normal operation state | 16*VC4 |
| PE60-P52 | Dedicated 1+1 protection attribute | Normal operation state | 16*VC4 |

In the network shown in Figure 3, when receiving a request for establishing a connection with 1*VC4 bandwidth and the Dedicated 1+1, Enhanced or Dedicated 1:1 protection between nodes PE40 and PE60, node PE40 in the network calculates an LSP path according to the information in the table of the information of the resources of the TE links in the global network shown in the above Table 5 stored locally, or requests a PCE for the information of an LSP path and finally acquires the information of the LSP path through a signaling process. Finally, node PE40 establishes LSP2 passing PE40-P53, P52-1-P53 and PE60-P52 and meeting the demand for the above protection grade through a signaling process.

In the case that operation fiber links between the two nodes on the MSP 2, P52 and P53, are disconnected, resources of the operation fiber links are switched to the corresponding resources of protection fiber links through section protection according to the existing 4-fiber bi-directional multiplex section protection ring protection technology, i.e. resources of TE link P52-1-P53 are switched into TE link P52-2-P53. Nodes P52 and P53 may respectively determine the operation states of the TE links between the two nodes as follows: the operation state of P52-1-P53 is updated to the "shared protection state" and the operation state of P52-2-P53 is updated to the "occupied state". In this case, a failure occurs in MSP 2 since configured multiplex section protection ring MSP 2 passes the disconnected TE link. All nodes which multiplex section protection ring MSP 2 passes, (P50, P51, P52, P53), can perceive that a failure occurs in MSP 2. According to the existing 4-fiber multiplex section protection ring protection technology, the nodes determine the changes in the operation states of the TE links affected by the failure according to the perceived failure as follows.

Nodes P50 and P51 may respectively determine the operation states of the TE links between the two nodes as follows: the operation state of P50-1-P51 is updated to the "Dedicated 1:1 state" and the operation state of P50-2-P51 is updated to the "normal operation state".

Nodes P51 and P52 may respectively determine the operation states of the TE links between the two nodes as follows: the operation state of P51-1-P52 is updated to the "Dedicated 1:1 state" and the operation state of P51-2-P52 is updated to the "normal operation state".

Nodes P50 and P53 may respectively determine the operation states of the TE links between the two nodes as follows: the operation state of P50-1-P53 is updated to the "Dedicated 1:1 state" and the operation state of P50-2-P53 is updated to the "normal operation state".

If a failure also occurs in the pair of fiber links between nodes P52 and PE60, PE60-1-P52, when the above failure occurs in the network, the nodes affected by the failure, PE60 and P52, may respectively determine that the operation state of the TE links between the two nodes, PE60-P52, are updated to the "unprotected state".

The nodes affected by the failure distribute the acquired updated information of the TE links to any other node or a PCE in the network with the format shown in the above Table 2, after the two failures occur in the network shown in Figure 3. Finally, the updated table of the information of the TE links in the global network is formed in the any other node or PCE in the network.

Figure 4 shows a schematic diagram of performing the rerouting optimization processing for existing LSPs after a failure occurs in the network shown in Figure 3. As shown in Figure 4, the head node of the established LSP2, PE40, may determine that LSP 2 passes the above two TE links where a failure occurs, P52-1-P53 and PE60-P52, at the same time, according to the above updated information of the TE links in the global network, and PE40 may determine that the protection grade demanded in advance cannot be met although LSP2 is not disconnected in this case. Therefore, PE40 reselects a new service path to optimize the existing service connection, LSP2, according to the updated information of the TE links in the global network to enable LSP2 meet the predetermined demand for protection grade of the service connection request, i.e. the demand for the protection grade of the Dedicated 1+1, Dedicated 1:1 or Enhanced of the service connection.

As shown in Figure 4, PE40 reselects the new service connection, LSP3 and initiates the establishing of LSP3. LSP3 passes the TE links, PE40-P50, P50-1-P51 and PE60-P51. The protection attribute of the TE link, PE40-P50, is the "Dedicated 1+1 protection" and the operation state of PE40-P50 is the "normal operation state". The protection attribute of the TE link, P50-1-P51, is the "Enhanced protection" and the operation state of P50-1-P51 is the "Dedicated 1:1 protection state". The protection attribute of the TE link, PE60-P51, is the "Dedicated 1+1 protection" and the operation state of PE60-P51 is the "normal operation state". Therefore, the newly established connection, LSP3, can meet the predefined demand for protection grade.

The foregoing are only preferred embodiments of the present invention. The protection scope of the present invention, however, is not limited to the above description. Any change or substitution, within the technical scope disclosed by the present invention, easily occurring to those skilled in the art should be covered by the protection scope of the present invention. Therefore, the protection scope of the present invention should be according to the claims.

## Claims

1. A method for processing information of a Traffic Engineering, TE, link, comprising:
acquiring, by a network node (P30, P31, P32, P33, PE 20, PE10), at least one protection attribute type of a TE link and operation state information corresponding to each protection attribute type of the TE link; wherein the operation state information comprises: a normal operation state, an occupied state, a disconnected state, an unprotected state, a shared protection state and a Dedicated 1:1 protection state (1-1);
and
distributing, by the network node (P30, P31, P32, P33, PE 20, PE10), the acquired at least one protection attribute type of the TE link and the operation state information corresponding to each protection attribute type of the TE link in a network (1-2).

2. The method according to Claim 1, wherein acquiring, by the network node, the at least one protection attribute type of the TE link and the operation state information corresponding to each protection attribute type specifically comprises:
acquiring, by the network node (P30, P31, P32, P33, PE 20, PE10) of the TE link after the TE link is configured with at least one protection ability, the at least one protection attribute type of the TE link between the network node (P30, P31, P32, P33, PE 20, PE 10) and other network nodes and the operation state information corresponding to each protection attribute type according to the configured at least one protection ability.

3. The method according to Claim 1, wherein acquiring, by the network node (P30, P31, P32, P33, PE 20, PE10), the at least one protection attribute type of the TE link and the operation state information corresponding to each protection attribute type specifically comprises:
updating, by a network node affected by a failure (P30, P31, P32, P33) or failure recovery, the operation state of the TE link and re-acquiring at least one protection attribute type of the TE link and operation state information corresponding to each protection attribute type.

4. The method according to Claim 1, wherein the at least one protection attribute type of the TE link comprises:
at least one of an Extra Service protection attribute type, an unprotected protection attribute type, a shared protection attribute type, a Dedicated 1:1 protection attribute type, a Dedicated 1+1 protection attribute type, and an enhanced protection attribute type; and
the operation state information corresponding to each protection attribute type comprises:
the normal operation state, the occupied state or the disconnected state corresponding to the Extra Service protection attribute type;
the normal operation state or disconnected state corresponding to the unprotected protection attribute type;
the normal operation state, an unprotected state or the disconnected state corresponding to the shared protection attribute type;
the normal operation state, unprotected state or disconnected state corresponding to the Dedicated 1:1 protection attribute type;
the normal operation state, unprotected state or disconnected state corresponding to the Dedicated 1+1 protection attribute type;
the normal operation state, the shared protection state, the Dedicated 1:1 protection state, the unprotected state and disconnected state corresponding to the enhanced protection attribute type.

5. The method according to any of Claims 1 to 4, wherein distributing, by the network node, the acquired at least one protection attribute type of the TE link and the operation state information corresponding to each protection attribute type specifically comprises:
binding, by the network node (P30, P31, P32, P33, PE 20, PE10), the acquired at least one protection attribute type of the TE link and the corresponding operation state information together; and
distributing, by the network node (P30, P31, P32, P33, PE 20, PE10), the bound protection attribute type of the TE link and the corresponding operation state information to any of any other node and a Path Calculation Element, PCE, in the network.

6. The method according to Claim 5, further comprising:
acquiring, by any other network node or the PCE, identifiers, protection attribute types of resources, and operation states and available bandwidths of resources of TE links in the network according to the received bound information.

7. The method according to Claim 6, further comprising:
establishing, by any ot her network node, a service connection according to the acquired identifiers, protection attribute types of the resources, and operation states and available bandwidths of the resources of the TE links in the network and a received connection establishing request; or
sending, by the any other network node, the received connection establishing request to the PCE, receiving, by the any other network node, information of a path obtained by the PCE according to the acquired identifiers, protection attribute types of the resources, and operation states and available bandwidths of the resources of the TE links in the network, and establishing, by the any other network node, the service connection according to the information of the path received from the PCE.

8. The method according to Claim 6, further comprising:
triggering, by the any other network node, a rerouting optimization processing of an existing service connection in the network according to the acquired identifiers, protection attribute types of the resources, and operation states and available bandwidths of the resources of the TE links in the network.

9. The method according to Claim 1, wherein the method is applicable to a Generalized Multi-Protocol Label Switching network and Multi-Protocol Label Switching network.

10. A network node (P30, P31, P32, P33, PE 20, PE10), comprising:
an information acquirement module, configured to acquire at least one protection attribute type of a Traffic Engineering, TE, link and operation state information corresponding to each protection attribute type of the TE link; wherein the operation state information comprises: a normal operation state, an occupied state, a disconnected state, an unprotected state, a shared protection state and a Dedicated 1:1 protection state;
and
an information distribution module, configured to distribute the acquired at least one protection attribute type of the TE link and the operation state information corresponding to each protection attribute type of the TE link in a network.

11. The network node according to Claim 10, wherein
the information acquirement module is further configured to acquire protection attribute types of TE links and operation state information corresponding to each protection attribute type sent from any other network node in the network, and acquire identifiers, protection attribute types of resources, and operation states and available bandwidths of resources of the TE links in the network according to the protection attribute types of the TE links and the operation state information.

12. The network node of Claim 11, further comprising:
a third module, configured to establish a service connection according to the identifiers, protection attribute types of the resources, and operation states and available bandwidths of the resources of the TE links in the network sent from the information acquirement module and a received connection establishment request.

13. Computer program, **characterized in** code means, which when run in a computer causes the computer to execute the method according to any of claims 1-9.

14. Computer program product including a computer readable medium and the computer program of claim 13, wherein said computer program is included in the computer readable medium.

## Patentansprüche

1. Verfahren zum Verarbeiten von Informationen einer Strecke des Traffic Engineering TE, mit den folgenden Schritten:
ein Netzwerkknoten (P30, P31, P32, P33, PE 20, PE10) beschafft mindestens einen Schutzattributtyp einer TE-Strecke und Betriebszustandsinformationen entsprechend jedem Schutzattributtyp der TE-Strecke; wobei die Betriebszustandsinformationen Folgendes umfassen: einen Normalbetriebszustand, einen belegten Zustand, einen getrennten Zustand, einen ungeschützten Zustand, einen Shared-Schutzzustand und einen dedizierten 1:1-Schutzzustand (1-1); und
der Netzwerkknoten (P30, P31, P32, P33, PE 20, PE10) verteilt den beschafften mindestens einen Schutzattributtyp der TE-Strecke und die Betriebszustandsinformationen entsprechend jedem Schutzattributtyp der TE-Strecke in einem Netzwerk (1-2).

2. Verfahren nach Anspruch 1, wobei das Beschaffen des mindestens einen Schutzattributtyps der TE-Strecke und der Betriebszustandsinformationen entsprechend jedem Schutzattributtyp durch den Netzwerkknoten spezifisch Folgendes umfasst:
der Netzwerkknoten (P30, P31, P32, P33, PE 20, PE10) der TE-Strecke beschafft, nachdem die TE-Strecke mit mindestens einer Schutzfähigkeit konfiguriert ist, den mindestens einen Schutzattributtyp der TE-Strecke zwischen dem Netzwerkknoten (P30, P31, P32, P33, PE 20, PE10) und anderen Netzwerkknoten und die Betriebszustandsinformationen entsprechend jedem Schutzattributtyp gemäß der konfigurierten mindestens einen Schutzfähigkeit.

3. Verfahren nach Anspruch 1, wobei das Beschaffen des mindestens einen Schutzattributtyps der TE-Strecke und der Betriebszustandsinformationen entsprechend jedem Schutzattributtyp durch den Netzwerkknoten (P30, P31, P32, P33, PE 20, PE10) spezifisch Folgendes umfasst:
ein von einem Ausfall (P30, P31, P32, P33) oder einer Ausfallbehebung betroffener Netzwerkknoten aktualisiert den Betriebszustand der TE-Strecke und beschafft erneut mindestens einen Schutzattributtyp der TE-Strecke und Betriebszustandsinformationen entsprechend jedem Schutzattributtyp.

4. Verfahren nach Anspruch 1, wobei der mindestens eine Schutzattributtyp der TE-Strecke Folgendes umfasst:
mindestens eine der folgenden Alternativen: einen Schutzattributtyp Extra Service, einen Schutzattributtyp Ungeschützt, einen Schutzattributtyp Shared, einen Schutzattributtyp Dediziert 1:1, einen Schutzattributtyp Dediziert 1+1 und einen Schutzattributtyp Erweitert; und
die Betriebszustandsinformationen entsprechend jedem Schutzattributtyp Folgendes umfassen:
den Normalbetriebszustand, den belegten Zustand oder den getrennten Zustand entsprechend dem Schutzattributtyp Extra Service;
den Normalbetriebszustand oder den getrennten Zustand entsprechend dem Schutzattributtyp Ungeschützt;
den Normalbetriebszustand, einen ungeschützten Zustand oder den getrennten Zustand entsprechend dem Schutzattributtyp Shared;
den Normalbetriebszustand, den ungeschützten Zustand oder den getrennten Zustand entsprechend dem Schutzattributtyp Dediziert 1:1;
den Normalbetriebszustand, den ungeschützten Zustand oder den getrennten Zustand entsprechend dem Schutzattributtyp Dediziert 1+1;
den Normalbetriebszustand, den Shared-Schutzzustand, den dedizierten 1:1-Schutzzustand, den ungeschützten Zustand und den getrennten Zustand entsprechend dem Schutzattributtyp Erweitert.

5. Verfahren nach einem der Ansprüche 1 bis 4, wobei das Verteilen des beschafften mindestens einen Schutzattributtyps der TE-Strecke und der Betriebszustandsinformationen entsprechend jedem Schutzattributtyp durch den Netzwerkknoten spezifisch Folgendes umfasst:
der Netzwerkknoten (P30, P31, P32, P33, PE 20, PE10) bindet den beschafften mindestens einen Schutzattributtyp der TE-Strecke und die entsprechenden Betriebszustandsinformationen zusammen; und
der Netzwerkknoten (P30, P31, P32, P33, PE 20, PE10) verteilt den gebundenen Schutzattributtyp der TE-Strecke und die entsprechenden Betriebszustandsinformationen an beliebige eines beliebigen anderen Knotens und eines Path Calculation Element PCE in dem Netzwerk.

6. Verfahren nach Anspruch 5, ferner mit dem folgenden Schritt:
ein beliebiger anderer Netzwerkknoten oder das PCE beschafft Kennungen, Schutzattributtypen von Betriebsmitteln und Betriebszustände und verfügbare Bandbreiten von Betriebsmitteln von TE-Strecken in dem Netzwerk gemäß den empfangenen gebundenen Informationen.

7. Verfahren nach Anspruch 6, ferner mit den folgenden Schritten:
ein beliebiger anderer Netzwerkknoten stellt eine Dienstverbindung gemäß den beschafften Kennungen, Schutzattributtypen der Betriebsmittel und Betriebszuständen und verfügbaren Bandbreiten der Betriebsmittel der TE-Strecken in dem Netzwerk und einer empfangenen Verbindungsherstellungsanforderung her; oder
der beliebige andere Netzwerkknoten sendet die empfangene Verbindungsherstellungsanforderung zu dem PCE, der beliebige andere Netzwerkknoten empfängt Informationen eines durch das PCE erhaltenen Pfads gemäß den beschafften Kennungen, Schutzattributtypen der Betriebsmitteln und Betriebszuständen und verfügbaren Bandbreiten der Betriebsmittel der TE-Strecken in dem Netzwerk und der beliebige andere Netzwerkknoten stellt die Dienstverbindung gemäß den von dem PCE empfangenen Informationen des Pfads her.

8. Verfahren nach Anspruch 6, ferner mit dem folgenden Schritt:
der beliebige andere Netzwerkknoten triggert eine Umroutungs-Optimierungsverarbeitung einer existierenden Dienstverbindung in dem Netzwerk gemäß den beschafften Kennungen, Schutzattributtypen der Betriebsmittel und Betriebszuständen und verfügbaren Bandbreiten der Betriebsmittel der TE-Strecken in dem Netzwerk.

9. Verfahren nach Anspruch 1, wobei das Verfahren auf ein Netzwerk mit Generalized Multi-Protocol Label Switching und ein Netzwerk mit Multi-Protocol Label Switching anwendbar ist.

10. Netzwerkknoten (P30, P31, P32, P33, PE 20, PE10), umfassend:
ein Informationsbeschaffungsmodul, das dafür ausgelegt ist, mindestens einen Schutzattributtyp einer Strecke des Traffic Engineering TE und Betriebszustandsinformationen entsprechend jedem Schutzattributtyp der TE-Strecke zu beschaffen, wobei die Betriebszustandsinformationen Folgendes umfassen: einen Normalbetriebszustand, einen belegten Zustand, einen getrennten Zustand, einen ungeschützten Zustand, einen Shared-Schutzzustand und einen dedizierten 1:1-Schutzzustand; und
ein Informationsverteilungsmodul, das dafür ausgelegt ist, den beschafften mindestens einen Schutzattributtyp der TE-Strecke und die Betriebszustandsinformationen entsprechend jedem Schutzattributtyp der TE-Strecke in einem Netzwerk zu verteilen.

11. Netzwerkknoten nach Anspruch 10, wobei
das Informationsbeschaffungsmodul ferner dafür ausgelegt ist, Schutzattributtypen von TE-Strecken und Betriebszustandsinformationen entsprechend jedem Schutzattributtyp, die von einem beliebigen anderen Netzwerkknoten in dem Netzwerk gesendet werden, zu beschaffen und Kennungen, Schutzattributtypen von Betriebsmitteln und Betriebszustände und verfügbare Bandbreiten von Betriebsmitteln der TE-Strecken in dem Netzwerk gemäß den Schutzattributtypen der TE-Strecken und den Betriebszustandsinformationen zu beschaffen.

12. Netzwerkknoten nach Anspruch 11, ferner umfassend:
ein drittes Modul, das dafür ausgelegt ist, eine Dienstverbindung gemäß den Kennungen, Schutzattributtypen der Betriebsmittel und Betriebszuständen und verfügbaren Bandbreiten der Betriebsmittel der TE-Strecken in dem Netzwerk, die von dem Informationsbeschaffungsmodul gesendet werden, und einer empfangenen Verbindungsherstellungsanforderung herzustellen.

13. Computerprogramm, das in Codemitteln charakterisiert ist, die, wenn sie in einem Computer ausgeführt werden, bewirken, dass der Computer das Verfahren nach einem der Ansprüche 1-9 ausführt.

14. Computerprogrammprodukt mit einem computerlesbaren Medium und dem Computerprogramm von Anspruch 13, wobei das Computerprogramm in dem computerlesbaren Medium enthalten ist.

## Revendications

1. Procédé de traitement d'informations d'une liaison d'Ingénierie de Trafic, TE, comprenant :
l'acquisition, par un noeud de réseau (P30, P31, P32, P33, PE20, PE10) d'au moins un type d'attribut de protection d'une liaison TE et d'informations d'état opérationnel correspondant à chaque type d'attribut de protection de la liaison TE ; les informations d'état opérationnel comprenant : un état opérationnel normal, un état occupé, un état déconnecté, un état non protégé, un état à protection partagée et un état à protection Dédiée 1:1 (1-1) ;
et
la distribution, par le noeud de réseau (P30, P31, P32, P33, PE20, PE10), de l'au moins un type d'attribut de protection acquis de la liaison TE et des informations d'état opérationnel correspondant à chaque type d'attribut de protection de la liaison TE dans un réseau (1-2).

2. Procédé selon la revendication 1, dans lequel l'acquisition, par le noeud de réseau, de l'au moins un type d'attribut de protection de la liaison TE et des informations d'état opérationnel correspondant à chaque type d'attribut de protection comprend spécifiquement :
l'acquisition, par le noeud de réseau (P30, P31, P32, P33, PE20, PE10) de la liaison TE après que la liaison TE a été configurée avec au moins une capacité de protection, de l'au moins un type d'attribut de protection de la liaison TE entre le noeud de réseau (P30, P31, P32, P33, PE20, PE10) et d'autres noeuds de réseau et les informations d'état opérationnel correspondant à chaque type d'attribut de protection en fonction de l'au moins une capacité de protection configurée.

3. Procédé selon la revendication 1, dans lequel l'acquisition, par le noeud de réseau (P30, P31, P32, P33, PE20, PE10), de l'au moins un type d'attribut de protection de la liaison TE et des informations d'état opérationnel correspondant à chaque type d'attribut de protection comprend spécifiquement :
l'actualisation, par un noeud de réseau affecté par une défaillance (P30, P31, P32, P33) ou une reprise après défaillance, de l'état opérationnel de la liaison TE et la réacquisition d'au moins un type d'attribut de protection de la liaison TE et d'informations d'état opérationnel correspondant à chaque type d'attribut de protection.

4. Procédé selon la revendication 1, dans lequel l'au moins un type d'attribut de protection de la liaison TE comprend :
au moins l'un d'un type d'attribut de protection de Service Supplémentaire, d'un type d'attribut de protection non protégée, d'un type d'attribut de protection partagée, d'un type d'attribut de protection Dédiée 1:1, d'un type d'attribut de protection Dédié 1+1, et d'un type d'attribut de protection rehaussée ; et
les informations d'état opérationnel correspondant à chaque type d'attribut de protection comprennent :
l'état opérationnel normal, l'état occupé ou l'état déconnecté correspondant au type d'attribut de protection de Service Supplémentaire ;
l'état opérationnel normal ou l'état déconnecté correspondant au type d'attribut de protection non protégée ;
l'état opérationnel normal, l'état non protégé ou l'état déconnecté correspondant au type d'attribut de protection partagée ;
l'état opérationnel normal, l'état non protégé ou l'état déconnecté correspondant au type d'attribut de protection Dédiée 1:1 ;
l'état opérationnel normal, l'état non protégé ou l'état déconnecté correspondant au type d'attribut de protection Dédiée 1+1 ;
l'état opérationnel normal, l'état à protection partagée, l'état à protection Dédiée 1:1, l'état non protégé ou l'état déconnecté correspondant au type d'attribut de protection rehaussée.

5. Procédé selon l'une quelconque des revendications 1 à 4, dans lequel la distribution, par le noeud de réseau, de l'au moins un type d'attribut de protection acquis de la liaison TE et des informations d'état opérationnel correspondant à chaque type d'attribut de protection comprend spécifiquement :
la liaison par le noeud de réseau (P30, P31, P32, P33, PE20, PE10) de l'au moins un type d'attribut de protection acquis de la liaison TE et des informations d'état opérationnel correspondantes; et
la distribution, par le noeud de réseau (P30, P31, P32, P33, PE20, PE10), du type d'attribut de protection lié de la liaison TE et des informations d'état opérationnel correspondantes à l'un quelconque de n'importe quel autre noeud et d'un Elément de Calcul de Chemin, PCE, dans le réseau.

6. Procédé selon la revendication 5, comprenant en outre :
l'acquisition, par n'importe quel autre noeud de réseau ou le PCE, d'identifiants, de types d'attributs de protection de ressources, et d'états opérationnels et largeurs de bandes disponibles de ressources de liaisons TE dans le réseau en fonction des informations liées reçues.

7. Procédé selon la revendication 6, comprenant en outre :
l'établissement, par n'importe quel autre noeud de réseau, d'une connexion de service en fonction des identifiants, types d'attributs de protection des ressources, et états opérationnels et largeurs de bandes disponibles des ressources des liaisons TE dans le réseau qui ont été acquis et d'une requête d'établissement de connexion reçue ; et
l'envoi, par le n'importe quel autre noeud de réseau, de la requête d'établissement de connexion reçue au PCE, la réception, par le n'importe quel autre noeud de réseau d'informations d'un chemin obtenues par le PCE en fonction des identifiants, types d'attributs de protection de ressources, et états opérationnels et largeurs de bandes disponibles des ressources des liaisons TE dans le réseau qui ont été acquis, et l'établissement, par le n'importe quel autre noeud de réseau, de la connexion de service en fonction des informations du chemin reçues depuis le PCE.

8. Procédé selon la revendication 6, comprenant en outre :
le déclenchement, par le n'importe quel autre noeud de réseau, d'un traitement d'optimisation de réacheminement d'une connexion de service existante dans le réseau en fonction des identifiants, types d'attributs de protection des ressources et états opérationnels et largeurs de bandes disponibles de ressources des liaisons TE dans le réseau qui ont été acquis.

9. Procédé selon la revendication 1, le procédé étant applicable à un réseau à Commutation d'Etiquettes à Protocoles Multiples Généralisé et un réseau à Commutation d'Etiquettes à Protocoles Multiples.

10. Noeud de réseau (P30, P31, P32, P33, PE20, PE10) comprenant :
un module d'acquisition d'informations, configuré pour acquérir au moins un type d'attribut de protection d'une liaison d'Ingénierie de Trafic, TE, et des informations d'état opérationnel correspondant à chaque type d'attribut de protection de la liaison TE ; les informations d'état opérationnel comprenant : un état opérationnel normal, un état occupé, un état déconnecté, un état non protégé, un état à protection partagée et un état à protection Dédiée 1:1 ;
et
un module de distribution d'informations, configuré pour distribuer l'au moins un type d'attribut de protection acquis de la liaison TE et des informations d'état opérationnel correspondant à chaque type d'attribut de protection de la liaison TE dans un réseau.

11. Noeud de réseau selon la revendication 10, dans lequel
le module d'acquisition d'informations est en outre configuré pour acquérir des types d'attributs de protection de liaisons TE et des informations d'état opérationnel correspondant à chaque type d'attribut de protection envoyés par n'importe quel autre noeud de réseau dans le réseau, et acquérir des identifiants, types d'attributs de protection de ressources, et états opérationnels et largeurs de bandes disponibles des ressources des liaisons TE dans le réseau qui ont été acquis, en fonction des types d'attribut de protection des liaisons TE et des informations d'état opérationnel.

12. Noeud de réseau selon la revendication 11, comprenant en outre :
un troisième module, configuré pour établir une connexion de service en fonction des identifiants, types d'attributs de protection des ressources, et états opérationnels et largeurs de bandes disponibles des ressources des liaisons TE dans le réseau envoyés par le module d'acquisition d'informations et une requête d'établissement de connexion reçue.

13. Programme informatique, **caractérisé par** des moyens de code, lesquels lorsqu'ils sont exécutés dans un ordinateur amènent l'ordinateur à exécuter le procédé selon l'une quelconque des revendications 1 à 9.

14. Produit de programme informatique comportant un support lisible par ordinateur et le programme informatique selon la revendication 13, ledit programme informatique étant inclus dans le support lisible par ordinateur.
